# EUROPEAN PATENT SPECIFICATION

(11) **EP 1 999 170 B1**
(45) Date of publication and mention of the grant of the patent: **20.07.2011**
(21) Application number: 07703546.7
(22) Date of filing: 16.02.2007
(51) Int. Cl.: C08F 210/02, C09D 123/08

(54) **AN EXTRUSION COATING COMPOSITION**
EXTRUSIONSBESCHICHTUNGSZUSAMMENSETZUNG
COMPOSITION DE REVETEMENT PAR EXTRUSION

(30) Priority: 24.03.2006 EP 06075723
(43) Date of publication of application: 10.12.2008
(73) Proprietor: Saudi Basic Industries Corporation, 11422 Riyadh (SA)
(72) Inventor: NEILEN, Marcellinus, Guilliame, Marie, NL-6160 GA Geleen (NL); TACX, Jacobus Christinus Josephus Franciscus, NL-6160 GA Geleen (NL); NEUTEBOOM, Peter, NL-6160 GA Geleen (NL); BONTE, Geert, Imelda, Valerie, NL-6160 GA Geleen (NL)
(74) Representative: Zuideveld, Mihaela
(86) International application number: PCT/EP2007/001562
(87) International publication number: WO 2007/110127

(56) References cited:
- WO-A-93/08222

## Description

The present invention relates to the use of a composition comprising a copolymer of ethylene and a comonomer in extrusion coating applications on a substrate.

The production processes of polyethylene are summarised in Handbook of Polyethylene by Andrew Peacock (2000; Dekker; ISBN 0824795466) at pages 43-66. Many types of polyethylene exist. Examples of different classes of polyethylene are high density polyethylene (HDPE), low density polyethylene (LDPE), linear low density polyethylene (LLDPE) and very low density polyethylene (VLDPE).

An important technical field of application of LDPE is the extrusion coating segment. During the extrusion coating process polymers and substrates are combined to form products with specific synergetic characteristics. The increasing processing and product requirements and quality demands may result in several different problems that can occur in the extrusion coating process. Examples of these problems are edge waving, edge tear, web break, gels, streaks, lacing, transfer thickness variation, machine thickness variation and die deposits.

The rheology-related phenomena that may cause problems in extrusion coating are for example web stability, neck-in and draw-down. The web stability is a problem with film processes because between the die exit and the cooling roll, several competing forces combine to complicate the web cooling process. Neck-in is the reduction of film width. It can cause uncoated areas on a substrate. Neck-in is less if the melt elasticity is high. Draw-down is the ability of a melt to be drawn to thin films without breaking and the maximum line speed at which the LDPE web breaks. A melt that is more viscous than elastic favours draw-down.

In extrusion coating, the thin molten polymer film is coated on the substrate. At high extrusion coating speed, even a minor disturbance on the melt web causes major quality problems that can very rapidly lead to large quantities of waste. Therefore polymers are required with high and consistent quality to avoid waste due to polymer edge instability and web breaks.

Today LDPE produced by using high-pressure autoclave technology is the commercially applied polyethylene for use in extrusion coating applications. LDPE obtained with an autoclave process is suitable to be applied in extrusion coating for reasons of processability (web stability, draw-down and neck-in) in relation to the molecular composition (broad distribution, long chain branching) of the polymer.

As described in "Vacuum control of web stability improves sheet yield" (British Plastics and Rubber; January 01, 1993; pages 4-5) the web stability or web width variation is a critical problem with film processes because between the die exit and the cooling roll, several competing forces combine to complicate the web cooling process. The film normally exits the die many times thicker than its finished form and must be stretched while in the molten state. The elongation ratios may range between certain values and every polymer has a finite limit beyond it will no longer stretch uniformly. This draw resonance or melt resonance is characterized by a cyclic thick/thin pattern in the web, especially near the die ends.

It is the object of the present invention to provide a LDPE copolymer that enhances the web stability during the extrusion coating process while obtaining also the other desired properties.

The invention is directed to the use of a composition comprising a copolymer of ethylene and a co monomer copolymerisable therewith in extrusion coating applications on a substrate characterised in that the polymerisation of ethylene and a co monomer takes place in a tubular reactor at a peak temperature between 300°C and 350°C and wherein the co monomer is a bifunctional α, ω-alkadiene.

The use of the obtained ethylene polymer in the extrusion coating process results in an improved web stability.

According to a preferred embodiment of the invention the bifunctional α, ω- diene has between 6 and 24 carbon atoms.

Suitable examples of bifunctional α, ω- alkadienes include for example 1,4-hexadiene, 1,7-octadiene, 1,9-decadiene and 1,13-tetradecadiene.

Preferably, the co monomer is applied in an amount between 0.01 mol % and 0.5 mol % relative to the total amount of monomers.

The preferred amount of bifunctional diene results in the desired molecular structure which determines the end performance of the product.

According to a further preferred embodiment of the invention the polymerisation takes place at a peak temperature between 310°C and 340°C.

Furthermore, the polymer has the required rheological properties to ascertain good web width variation, neck in (shrinkage in width of the LDPE web) and draw down (the maximum line speed at which the LDPE web breaks).

An unexpectedly good combination of web stability, neck-in and draw down, adhesion, printability, barrier properties, hot tack and heat-sealing performance is obtained. Surprisingly these properties are obtained with LDPE obtained with a tubular process.

The product yield of the polymerisation is high.

The polymer obtained also results at higher coating speeds in a high and in a consistent quality of the polymer to avoid waste due to polymer edge instability and web breaks.

Said improvements and advantages are obtained by the combination of specific features being the polymerisation in the tubular reactor, the polymerisation at the specific peak temperature, the selection of the specific co monomer and the use of the specific amount of the selected specific co monomer.

A man skilled in the art in the technical field of extrusion coating considers only low density polyethylene manufactured on a high pressure autoclave reactor particularly to be adapted to the extrusion coating application. Very surprisingly the tubular polymerisation process according to the present invention provides a polymer which is highly suitable to be applied in an extrusion coating process.

According to a preferred embodiment of the invention the reactor inlet pressure ranges between 100 MPa and 350 MPa.

A relatively low pressure results in a relatively high degree of long chain branching and in improved web stability. However a relatively low pressure also reduces the solvent capability of ethylene gives more ethylene-LDPE demixing, gives more deposition of LDPE near the reactor wall, more deterioration of heat transfer will occur and a lower conversion is obtained. Therefore an optimum for the reactor inlet pressure has to be selected.

More preferably the reactor inlet pressure ranges between 150 MPa and 300 MPa.

The polymerisation temperature can be optimally controlled by metering an initiator for example organic peroxide or a mixture of initiators at one injection point or at different injection points. The man skilled in the art has to determine the suitable initiators or mixture of initiators, the concentration of the initiator and the the injection point(s) being most suitable to be used.

To obtain the desired peak temperature during the polymerisation process the man skilled in the art has to select the initiator (mixture) and the amount of initiator and suitable organic peroxides include for example peroxyester, peroxyketone, peroxyketal and peroxycarbonate such as for example di-2-ethylhexyl-peroxydicarbonate, diacetylperoxydicarbonate, dicyclohexyl-peroxydicarbonate, tert. - amylperpivalate, cumyl perneodecanoate, tert. -butylperneodecanoate, tert. -butyl perpivalate, tert. -butylpermaleinate, tert. -butylperisononanoate, tert.-butylperbenzoate, tert,-butylperoxy-2-ethylhexanoate. tert,-butyl-hydroperoxide, d-tert. butyl peroxide, di-isopropylbenzol hydroperoxide, di-isononanoyl peroxide, didecanoylperoxide, cumol hydroperoxide, methyl isobutyl ketone hydroperoxide, 2,2-bis-(tert.-butylperoxy)-butane and/or 3,4-dimethyl-3,4-diphenylhexane.

Also difunctional or higher functional peroxides may be applied.

According to a preferred embodiment of the invention the peroxide is a difunctional peroxide.

Suitable bifunctional peroxides include for example 2,5-dimethyl-2,5-di-tertiair-butylperoxyhexane , 2,5-dimethyl-2,5-tertiair-peroxyhexyne-3 3,6,9-triethyl-3,6,9-trimethyl-1,4,7-triperoxononane, 3,3,6,6,9,9-hexamethyl-1,2,4,5-tetraoxacyclononane, n-ethyl-4,4-di-tertiair-butylperoxyvalerate, 1,1-di-tertiair-butylperoxy-3,3,5-trimethylcyclohexane, ethyl-3,3-di-tertiair-butylperoxybutyrate 1,1-di-tertiair-butylperoxycyclohexane, 2,2-di-tertiair-butylperoxybutane ethyl-3,3-di-tertair-amylperoxybutyrate, 2,2-di-4,4-di-tertiair-butylperoxycyclohexylpropane, methyl-isobutyl-peroxide, 1,1-di-tertiair-amylperoxycyclohexane, 1,1-di-tertiair-butylperoxycyclohexane, 2,5-di-methyl-2,5-di-2-ethyl-hexanoylperoxyhexane and/ or 1,4-di-tertiair-butylperoxycarbocyclohexane may be applied.

The initiator concentration generally ranges between 0.5 ppm (weight) and 100 ppm (weight) relative to the quantity of ethylene.

During the polymerisation it is also possible to add for example inhibitors, scavengers and/or a chain regulator (such as for example an alcohol, an aldehyde, a ketone or an aliphatic hydrocarbon). Very suitable chain regulators are isopropyl alcohol, propane, propylene and propione aldehyde.

The co monomer may be added at one injection point and at different injection points downstream in the axial direction of the reactor tube.

According to a preferred embodiment of the invention the co monomer is added at different injection points downstream the axial direction of the reactor tube. The use of different injection points results in the desired molecular architecture of the polymer and furthermore in minimised gel formation and optimised processability and optical characteristics.

The reactor may be a tubular polymerisation reactor having the inside surface of the reactor profiled according to for example WO2005/065818. The profile can be provided both on a tube segment and on a coupling between the tube segments the profile forms a solid and integral body with the tube segment and/or with the coupling.

Generally the density of the obtained LDPE ranges between 910 kg/m³ and 935 kg/m³ (according to ISO 1183) and the melt index ranges between 0.10 dg/minute and 100 dg/minute (according to ASTM D 1133).

The copolymer may comprise besides bifunctional diene, also other specific co monomers to be able to obtain specific required properties. Preferably, the copolymer consists of ethylene monomer units and bifunctional diene units. The amount of unsaturations and crosslinking has to be as low as possible.

The ethylene copolymer has the following film properties after applying the extrusion coating process:
the web stability is between 0 and 3.10⁻³ m
the neck in is between 0 and 120.10⁻³ m and
the draw down is higher than 300 m/min.

The web stability , the neck in and the draw down were determined using the SABIC Pilot Extrusion Coating Line as disclosed in the presentation "Statistical Models to describe the correlations between the molecular mass distribution and the extrusion coating process ability "by Marcel Neilen on the 2003 TAPPI 9th European PLACE Conference, May 12-14, 2003 in Rome. The neck-in is the shrinkage in width of the LDPE web in comparison with the internal die width.

The gel count is less than 5 particles per m² larger than 600 .10⁻⁶ m.

The gel count is determined according to the "DSM K gel count determination 2245" (using a Göttfert single screw equipment without mixing parts, UD 20 with an internal cylinder diameter of 30 mm, temperature profile of machine 150°C, 180°C, 220°C, 260°C, 260°C ; temperature of extruder head 260°C, 260°C, 260°C; 320 mm cast film coat hanger die, die temperature 260°C, screw constant 120 RPM and film thickness 50.10⁻⁶ m).

Surprisingly these values for the web stability, the neck in and the gel count can be obtained with the LDPE tubular product.

The LDPE obtained is suitable to be used in extrusion coating applications for coatings on various substrates such as for example paper, board, cloth and aluminium. The coatings provide for example a very good adhesion, heat sealing performance and moisture barrier to the substrate. Suitable fields of application are for example liquid packaging cartons, aseptic packaging, food packaging, tapes, paper board cups, food carton stock, frozen food and dual oven able trays, pouches, multi wall bags, release papers and photographic papers such as for example ink jet papers.

The high-pressure polymerisation processes of ethylene are described in Handbook of Polyethylene by Andrew Peacock (2000; Dekker ;ISBN 0824795466) at pages 43-53. Since the first production of low density polyethylene there has been an extraordinary divergence of manufacturing processes. Tubular and autoclave reactors are very different technical systems because of for example their disparate profiles requiring different methods of temperature control. The two divergent reactor geometries pose uniquely different chemical engineering problems requiring disparate control conditions. The difference between the essential lack of mixing in the tubular reactor and the high levels of mixing in the autoclave presents the need of distinct control of reaction conditions and hence the molecular structure of the products is different. Consequently the end properties of the polymer are totally different.

During the polyethylene high-pressure process in a tubular reactor polyethylene is prepared by radical polymerisation in supercritical ethylene. Metering an initiator such as for example organic peroxide, azodicarboxylic acid ester, azodicarboxylic acid dinitrile and hydrocarbons that decompose into radicals can start the polymerisation. Oxygen and air are also are suitable to serve as an initiator. The ethylene, which is compressed to the desired pressure, flows through the reactor tube which is provided on the outside with a jacket through which cooling water flows in order to remove the developed heat of reaction via the wall. This reactor has a length between for example 1000 meters and 3000 meters and an internal diameter between for example 0.01 meter and 0.10 meter. The incoming ethylene is first heated to the decomposition temperature of the initiator, whereupon an initiator solution is metered and the polymerisation subsequently starts. Controlling the quantity of initiator attains the desired peak temperature being the maximum temperature during the polymerisation. Thereafter the mixture cools and, after the temperature has dropped to a sufficiently low level, initiator is metered one or more times again via one of the initiator injection points. Downstream from the reactor the obtained product is transported to the product silos after for example extrusion, separation and drying. Owing to the exothermic nature of the reaction, the temperature increases as the reaction proceeds to a maximum peak temperature and considerable heat is evolved. Generally the temperature in the reaction zone of the reactor ranges between 40°C and 375°C. Generally the reactor inlet pressure ranges between 50 MPa and 500 MPa where reactor inlet pressure refers to the (total) pressure at which the feed stream leaves the compressor and enters the reactor.

WO 93/08222 is directed to an unsaturated ethylene copolymer and the use of this ethylene copolymer in compositions for producing cross-linked structures for example electric cables. These unsaturated copolymers are intended for use when a polymer with reactive sites in the form of ethylenic unsaturation is to be produced. Ethylenic unsaturation may be used for introducing functional groups, such as hydroxyl and carboxyl, in the polymer by a reaction with compounds containing such groups. The unsaturated ethylene copolymer has to be applied outside the polymerization reactor. The ethylene copolymers according to WO 93/08222 are unsuitable to be applied in the technical field of extrusion coating because the required web stability; draw down and neck-in properties cannot be obtained because of the high amount of unsaturation in the copolymer. In WO 93/08222 the amount of unsaturated bounds in the copolymer has to be high after the reactor because of the crosslinking requirements in for example extrusion of tubes, of cable insulating material or cable sheathing, blow moulding and rotational moulding in compositions for producing cross-linked structures, such as insulating-layer material, semiconductor-layer material and sheath material for electric cables. In WO 93/08222 the polymerization takes place in an autoclave or a tube reactor and the reaction temperatures applied in the experiments performed in a tube reactor range between 180 °C and 240 °C.

The invention will be elucidated with the following non-restrictive example.

### Example I and Comparative Example A

An ethylene copolymer was obtained by polymerising ethylene in a tubular reactor in the presence of 1,9-decadiene in an amount and with a peak temperature of the polymerisation as indicated in Table I.

As chain transfer agent propylene was added in the low pressure recycle before the primary compressor controlling the melt flow index (MFI) to the value as indicated in Table I.

The initiator was added at injection points downstream in the axial direction of the reactor tube. The reactor inlet pressure amounted to 250 MPa and the outlet pressure amounted to 200 MPa. The total reactor length amounted to 2500 m and the internal tube diameter was 0.05 m.

A pure mono layer of the product obtained was processed on the ER-WE-PA extrusion coating line of SABIC. This coating line is disclosed in the presentation "Statistical Models to describe the correlations between the molecular mass distribution and the extrusion coating processability "by Marcel Neilen on the 2003 TAPPI 9th European PLACE Conference, May 12-14, 2003 in Rome.

The extruder throughput was fixed on 0,01 kg/ m² at a velocity of 200 m/min. at the following settings:
- Substrate width: 8.10⁻¹ m
- Die temperature: 300°C.
- Line speed: up to 1000 m/min
- Die gap: 6.10⁻³ m

The obtained properties are summarised in Table I.

**TABLE I**

| Example | Amount of 1,9 decadiene | Peak Temperature | Web Stability | Neck-in | Draw down | Gel count | MFI |
|---|---|---|---|---|---|---|---|
| | mol % | °C | 10⁻³ m | 10⁻³ m | m/min | | dg/min |
| I | 0.1 | 300 | 6 | 135 | 300 | 6.0 | 4.8 |
| A | 0 | 300 | 8 | 177 | 600 | 3.1 | 4.9 |

The web stability , the neck in and the draw down were determined using the SABIC Pilot Extrusion Coating Line as disclosed in the presentation "Statistical Models to describe the correlations between the molecular mass distribution and the extrusion coating process ability "by Marcel Neilen on the 2003 TAPPI 9th European PLACE Conference, May 12-14, 2003 in Rome.

The gel count is determined according to the "DSM K gel count determination 2245" (using a Göttfert single screw equipment without mixing parts, UD 20 with an internal cylinder diameter of 30 mm, temperature profile of machine 150°C, 180°C, 220°C, 260°C, 260°C; temperature of extruder head 260°C, 260°C, 260°C; 320 mm cast film coat hanger die, die temperature 260°C, screw constant 120 RPM and film thickness 50. 10⁻⁶ m).

## Claims

1. Use of a composition comprising a copolymer of ethylene and a co monomer copolymerisable therewith in extrusion coating applications on a substrate **characterised in that** the polymerisation of ethylene and a co monomer takes place in a tubular reactor at a peak temperature between 300°C and 350°C and wherein the co monomer is a bifunctional α, ω-alkadiene.

2. Use of a composition according to Claim 1 for extrusion coating applications on a substrate **characterised in that** the bifunctional α,ω-alkadiene is 1, 4-hexadiene, 1, 7-octadiene, 1, 9-decadiene and/or 1, 13-tetradecadiene.

3. Use of a composition according to any one of Claims 1- 2 for extrusion coating applications on a substrate **characterised in that** the co monomer is applied in an amount between 0.01 mol % and 0.5 mol % relative to the total amount of monomer.

4. Use of a composition according to any one of Claims 1- 3 for extrusion coating applications on a substrate **characterised in that** the polymerisation takes place at a peak temperature between 310°C and 340°C.

5. Use of a composition according to any one of Claims 1- 4 for extrusion coating applications on a substrate **characterised in that** the monomer is added at different injection points downstream the axial direction of the reactor tube.

## Patentansprüche

1. Verwendung einer Zusammensetzung, die ein Copolymer von Ethylen und einem damit copolymerisierbaren Comonomer umfaßt, bei Extrusionsbeschichtungsanwendungen auf einem Substrat, **dadurch gekennzeichnet, daß** die Polymerisation von Ethylen und einem Comonomer in einem Rohrreaktor bei einer Spitzentemperatur zwischen 300°C und 350°C stattfindet, und wobei es sich bei dem Comonomer um ein bifunktionelles α,ω-Alkadien handelt.

2. Verwendung einer Zusammensetzung nach Anspruch 1 für Extrusionsbeschichtungsanwendungen auf einem Substrat, **dadurch gekennzeichnet, daß** es sich bei dem bifunktionellen α,ω-Alkadien um 1,4-Hexadien, 1,7-Octadien, 1,9-Decadien und/oder 1,13-Tetradecadien handelt.

3. Verwendung einer Zusammensetzung nach einem der Ansprüche 1-2 für Extrusionsbeschichtungsanwendungen auf einem Substrat, **dadurch gekennzeichnet, daß** das Comonomer in einer Menge zwischen 0,01 Mol-% und 0,5 Mol-%, bezogen auf die Gesamtmenge an Monomer, angewandt wird.

4. Verwendung einer Zusammensetzung nach einem der Ansprüche 1-3 für Extrusionsbeschichtungsanwendungen auf einem Substrat, **dadurch gekennzeichnet,**
**daß** die Polymerisation bei einer Spitzentemperatur zwischen 310°C und 340°C stattfindet.

5. Verwendung einer Zusammensetzung nach einem der Ansprüche 1-4 für Extrusionsbeschichtungsanwendungen auf einem Substrat, **dadurch gekennzeichnet, daß** das Monomer an verschiedenen Einspritzpunkten stromabwärts der Axialrichtung des Reaktorrohrs zugegeben wird.

## Revendications

1. Utilisation d'une composition comprenant un copolymère d'éthylène et d'un comonomère copolymérisable avec celui-ci dans des applications de revêtement par extrusion sur un substrat, **caractérisée en ce que** la polymérisation d'éthylène et d'un comonomère a lieu dans un réacteur tubulaire à une température maximum de 300 °C à 350 °C et dans laquelle le comonomère est un α,ω-alcadiène bifonctionnel.

2. Utilisation d'une composition selon la revendication 1 pour des applications de revêtement par extrusion sur un substrat, **caractérisée en ce que** le α,ω-alcadiène bifonctionnel est le 1,4-hexadiène, le 1,7-octadiène, le 1,9-décadiène et/ou le 1,13-tétradécadiène.

3. Utilisation d'une composition selon l'une quelconque des revendications 1-2 pour des applications de revêtement par extrusion sur un substrat, **caractérisée en ce que** le comonomère est appliqué dans une quantité représentant un pourcentage molaire de 0,01 % à 0,5 % relativement à la quantité totale de monomère.

4. Utilisation d'une composition selon l'une quelconque des revendications 1-3 pour des
applications de revêtement par extrusion sur un substrat, **caractérisée en ce que** la polymérisation a lieu à une température maximum de 310 °C à 340 °C.

5. Utilisation d'une composition selon l'une quelconque des revendications 1-4 pour des applications de revêtement par extrusion sur un substrat, **caractérisée en ce que** le monomère est ajouté à différents points d'injection en aval de la direction axiale du réacteur tubulaire.
